# EUROPÄISCHE PATENTSCHRIFT

(11) **EP 1 880 926 B1**
(45) Veröffentlichungstag und Bekanntmachung des Hinweises auf die Patenterteilung: **29.09.2010**
(21) Anmeldenummer: 07013555.3
(22) Anmeldetag: 11.07.2007
(51) Int. Cl.: B62D 25/14

(54) **Kraftfahrzeug mit einem Cockpitmodul**
Motor vehicle with a cockpit module
Véhicule automobile doté d'un module de cockpit

(30) Priorität: 20.07.2006 DE 102006033556
(43) Veröffentlichungstag der Anmeldung: 23.01.2008
(73) Patentinhaber: Bayerische Motoren Werke Aktiengesellschaft, 80809 München (DE)
(72) Erfinder: Stemp, Norbert, 82223 Eichenau (DE)

(56) Entgegenhaltungen:
- EP-A- 0 858 943
- EP-A- 1 380 494
- WO-A-01/85529
- DE-A1- 4 134 436
- DE-A1-102004 026 876

## Beschreibung

Die Erfindung betrifft ein Kraftfahrzeug mit einem Cockpitmodul nach dem Oberbegriff des Patentanspruchs 1.

Im Kraftfahrzeugbau gibt es seit vielen Jahren Bestrebungen, einzelne Bauteile vorab zu Modulen zusammen zu bauen. Diese vormontierten Module werden dann an die eigentliche Montagelinie des Kraftfahrzeugs angeliefert und dort verbaut.

Aus der gattungsgemäßen EP 1 380 494 A2 ist bereits ein klassisches Cockpitmodul mit einem Tragrohr bekannt, das im mittleren Bereich über einen Halter am unteren Windlauf abgestützt ist. Dabei erfolgt ein Toleranzausgleich zwischen dem Halter und dem unteren Windlauf über ein Toleranzausgleichselement.

Ferner ist aus der DE 41 34 436 A1 ein Cockpitmodul bekannt, das ein Tragrohr, eine Armaturentafel sowie ein Heiz- oder Klimagerät umfasst. Dabei dient das Tragrohr quasi als Cockpitträger, an dem die anderen Teile, wie die Armaturentafel angebaut sind. Das Tragrohr erstreckt sich über die gesamte Breite des Cockpitmoduls. Bei der Montage des Cockpitmoduls in der Kraftfahrzeugkarosserie wird das Tragrohr mit seinen Enden jeweils mit den A-Säulen der Kraftfahrzeugkarosserie verbunden. Für eine ausreichend steife Befestigung des Cockpitmoduls reichen diese beiden Befestigungen aber nicht aus. Daher ist das Cockpitmodul zusätzlich mit dem unteren Windlauf der Kraftfahrzeugkarosserie verbunden. Der untere Windlauf ist ein Querträger im oberen Bereich der Stirnwand, der sich wie auch das Tragrohr zwischen den beiden A-Säulen erstreckt. Er bildet üblicherweise zugleich die untere Begrenzung der Windschutzscheibe. Zur Befestigung des Cockpitmoduls am unteren Windlauf sind an diesem Zentrierdorne angebracht, über die entsprechende Aufnahmen im Cockpitmodul beim Einführen des Cockpitmoduls in die Fahrzeugkarosserie passgenau geschoben werden.

Aufgabe der Erfindung ist es, ein Kraftfahrzeug mit einem Cockpitmodul zu schaffen, das auf einfache Weise mit der Karosserie des Kraftfahrzeugs verbindbar ist.

Diese Aufgabe wird mit einem Kraftfahrzeug mit einem Cockpitmodul mit den Merkmalen des Patentanspruchs 1 gelöst.

Erfindungsgemäß besteht ein Cockpitmodul eines Kraftfahrzeugs zumindest aus einem Tragrohr und einer damit verbundenen Armaturentafel. Die seitlichen Enden des Tragrohrs sind mit den A-Säulen der Fahrzeugkarosserie verbunden. Zusätzlich ist das Tragrohr über einen Halter im Bereich zwischen den beiden A-Säulen an einem unteren Windlauf abgestützt, wobei beim Zusammenbau des Cockpitmoduls ein Toleranzausgleich zwischen dem Tragrohr und dem Halter in zumindest einer Richtung möglich ist. Auf diese Weise ist es möglich, dass der Halter unabhängig von den Fertigungstoleranzen des Tragrohres zumindest annähernd in seiner Sollposition am Tragrohr bzw. im Fahrzeug befestigbar ist.

Das Cockpitmodul kann beispielsweise ein Head-up Display umfassen. Dieses muss annähernd in seiner Sollposition eingebaut werden, da ansonsten die Anzeigen an der Windschutzscheibe verzerrt dargestellt sind. Dieses Head-up Display kann nun mit dem Halter statt mit dem Tragrohr verbunden sein. So haben die Fertigungstoleranzen des Tragrohres keinen negativen Einfluss mehr auf das Head-up Display. Allgemein können alle toleranzempfindlichen Anbauteile mit dem Halter verbunden werden, sodass die Toleranzen des Tragrohres im mittleren Bereich nur geringe Auswirkungen auf die Anbauteile haben. Auch die Lenksäule kann aus diesem Grund direkt mit dem Halter verbunden werden.

Bevorzugt wird der Halter beim Zusammenbau des Cockpitmoduls in Bezug auf die Verbindungspunkte des Tragrohrs zu den A-Säulen positioniert. Die A-Säulen als Referenzpunkte weisen nur vergleichsweise geringe Toleranzen auf. Damit kann sichergestellt werden, dass nach der Montage des Cockpitmoduls im Fahrzeug der Halter nur geringe Abweichungen zu seiner Sollposition aufweist.

Idealerweise ist zusätzlich bei der Montage des Cockpitmoduls in der Fahrzeugkarosserie ein Toleranzausgleich zwischen dem Halter und einem unteren Windlauf der Fahrzeugkarosserie in zumindest einer Richtung möglich. Dadurch führen Toleranzen des unteren Windlaufs nicht mehr zu Abweichungen des Halters von seiner Sollposition. Um insgesamt möglichst viele Abweichungen ausgleichen zu können, ist günstigerweise der Toleranzausgleich zwischen dem Halter und dem unteren Windlauf sowohl in Fahrzeuglängsrichtung als auch in Richtung der Fahrzeughöhenerstreckung möglich.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine perspektivische Darstellung eines in einer Kraftfahrzeugkarosserie verbauten Cockpitmoduls, wobei die Armaturentafel nicht dargestellt ist, und
- Fig. 2: eine leicht perspektivische Seitenansicht zur Darstellung der Befesti- gung des in Fig. 1 dargestellten Cockpitmoduls an der Kraftfahrzeugka- rosserie.

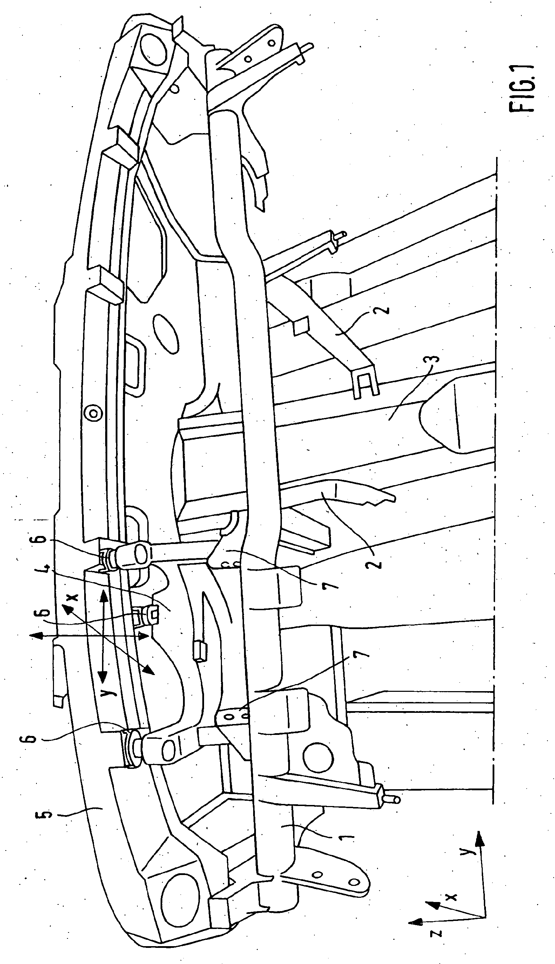

In Fig. 1 ist ein Cockpitmodul in einer Fahrgastzelle einer Karosserie eines Personenkraftfahrzeugs gezeigt. Das Cockpitmodul besteht aus einem eingezeichneten Tragrohr 1 und einer daran angebrachten Armaturentafel, die hier nicht dargestellt ist, da sie den Blick auf die wesentlichen Details verdecken würde. Das Tragrohr 1 erstreckt sich über die gesamte Breite des Cockpitmoduls und ist beidseitig mit seinen freien Enden an der Karosserie befestigt. Zusätzlich sind mit dem Tragrohr 1 zwei Abstützungen 2 verbunden, die das Tragrohr 1 im mittleren Bereich am Kardantunnel 3 abstützen. Damit ist das Cockpitmodul in Fahrzeugquerrichtung y und in der Höhenrichtung z bereits sicher mit der Karosserie verbunden. Um auch in der Fahrzeuglängsrichtung x die erforderliche steife Verbindung zu gewährleisten, ist am Tragrohr 1 ein Halter 4 angebracht, der sich wiederum an der Stirnwand und am unteren Windlauf 5 der Karosserie in Fahrzeuglängsrichtungabstützt, und mit der Stirnwand und mit dem unteren Windlauf 5 verschraubt ist.

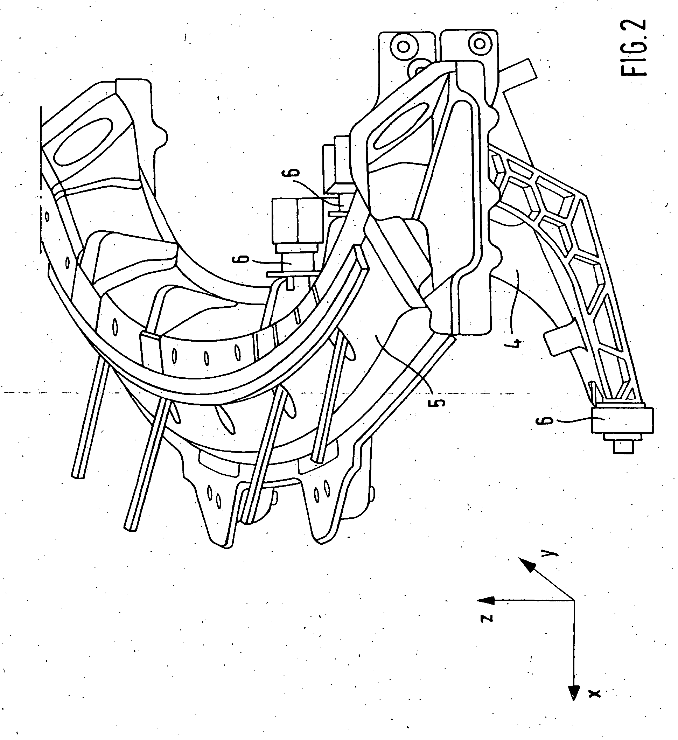

Die Verschraubung des Halters 4 am unteren Windlauf 5 ist - wie in Fig. 2 gut erkennbar - über Toleranzausgleichselemente 6 in Fahrzeuglängsrichtung x realisiert, die mit dem Halter 4 verbunden sind. Die grundsätzliche Funktionsweise der Toleranzausgleichselemente 6 ist beispielsweise aus der DE 42 24 575 A1 bekannt. Mit Hilfe eines solchen Toleranzausgleichselements 6 können zwei Bauteile - hier also der Halter 4 und der untere Windlauf 5 - in einer Abstandslage zueinander verschraubt werden. Dazu weist das Toleranzausgleichselement 6 ein Distanzstück zum Ausfüllen des Abstandes zwischen den beiden Bauteilen auf. Das Distanzstück besitzt ein in eine drehfeste Lage zum ersten Bauteil bringbares Stützteil und ein zum Stützteil durch Drehung axial verlagerbares Drehmitnahmeteil. Das Stützteil und das Drehmitnahmeteil stützen sich auf einer wendelförmigen Stützfläche ab, welche eine Steigung besitzt, die entgegengerichtet ist zu einer Steigung eines Gewindes einer Schraube, welche beim Eindrehen in eine axiale Öffnung des Drehmitnahmeteils letzteres mitdreht. Auf diese Weise ist ein Toleranzausgleich zwischen dem Halter 4 und dem unteren Windlauf 5 in Fahrzeuglängsrichtung x möglich. Auch die Verbindung zwischen dem Halter 4 und der Stirnwand ist über ein Toleranzausgleichselement 6 realisiert, wobei ebenfalls das Toleranzausgleichselement 6 mit dem Halter 4 verbunden ist. Die Schrauben werden jeweils vom Vorderwagen aus mit ihrem Schaft durch eine Ausnehmung im unteren Windlauf 5 bzw. durch eine Ausnehmung in der Stirnwand hindurch in die Toleranzausgleichselemente 6 hineingeschraubt. Dabei sind die Ausnehmungen im unteren Windlauf 5 bzw. in der Stirnwand etwas größer als der Schaft der Schrauben ausgeführt, sodass zusätzlich ein Toleranzausgleich in Fahrzeugquerrichtung y und in Richtung z der Fahrzeughöhenerstreckung möglich ist.

Zur Verschraubung des Halters 4 mit dem Tragrohr 1 weist dieses zwei nach vorne abstehende Winkel 7 auf, mit denen der Halter 4 verschraubt ist. Dabei liegen der Halter 4 und die Winkel 7 in einer Ebene aneinander an, die in Fahrzeuglängsrichtung x und in Richtung z der Fahrzeughöhenerstreckung aufgespannt wird. Der Schaft der eigentlichen Schrauben ragt durch Ausnehmungen in den Winkeln 7 des Tragrohrs 1 hindurch und ist in den Halter 4 verschraubt. Die Ausnehmungen in den Winkeln 7 sind dabei größer als der Schaft der Schrauben, sodass ein Toleranzausgleich in der x/z-Ebene möglich ist.

Aufgrund dieser mannigfachen Toleranzausgleichsmöglichkeiten kann der Halter 4 annähernd in seiner Sollposition im Fahrzeug montiert werden. Dazu wird bereits bei der Vormontage des Cockpitmoduls der Halter 4 relativ zu den später an den A-Säulen befestigten Endbereichen des Tragrohrs 1 ausgerichtet, sodass ein Verzug des Tragrohrs 1 im mittleren Bereich keinen Einfluss auf die Position des Halters 4 hat. Innerhalb des Cockpitmoduls ist ein Head-up Display und auch die Aufnahme für die Lenksäule an dem Halter 4 und nicht am Tragrohr 1 befestigt. Auf diese Weise wird vermieden, dass die Toleranzen des Tragrohrs 1 im mittleren Bereich zu Abweichungen der Position des Head-up Displays oder der Aufnahme der Lenksäule führen. Insbesondere bei einem Head-up Display ist dies von großer Bedeutung, da bereits kleine Abweichungen zu einer verzerrten Darstellung in der Windschutzscheibe führen.

Die Montage eines vollständig vormontierten Cockpitmoduls hat gegenüber einer separaten Montage des Tragrohrs 1 und der einzelnen Komponenten der Armaturentafel mehrere Vorteile: So kann das gesamte Cockpitmodul vor der Montage in das Fahrzeug bereits bezüglich zahlreicher Funktionalitäten getestet und überprüft werden. Die Armaturentafel weist bezüglich vieler einzelnen Baugruppen, wie beispielsweise bezüglich des Defrosterkanals wesentlich höhere Gestaltungsfreiheiten auf, da die Gestaltung nicht mehr aufgrund der sehr begrenzten Montagemöglichkeiten im Fahrzeug erheblich eingeschränkt ist. Die Montage des Cockpitmoduls benötigt wesentlich weniger Montagezeit, als die separate Montage der einzelnen Komponenten.

## Patentansprüche

1. Kraftfahrzeug mit einem Cockpitmodul, das zumindest aus einem Tragrohr (1) und einer damit verbundenen Armaturentafel besteht, wobei die seitlichen Enden des Tragrohrs (1) mit den A-Säulen der Fahrzeugkarosserie verbunden sind, wobei das Tragrohr (1) über einen Halter (4) im Bereich zwischen den beiden A-Säulen an einem unteren Windlauf (5) abgestützt ist, **dadurch gekennzeichnet, dass** beim Zusammenbau des Cockpitmoduls ein Toleranzausgleich zwischen dem Tragrohr (1) und dem Halter (4) in zumindest einer Richtung möglich ist, wobei ein Head-up Display und / oder eine Lenksäule als toleranzempfindliche Anbauteile mit dem Halter verbunden sind.

2. Kraftfahrzeug nach Anspruch 1, **dadurch gekennzeichnet, dass** der Halter (4) beim Zusammenbau in Bezug auf die Verbindungspunkte des Tragrohrs (1) zu den A-Säulen positioniert wird.

3. Kraftfahrzeug nach Anspruch 1 oder 2, **dadurch gekennzeichnet, dass** der Toleranzausgleich zumindest in Fahrzeuglängsrichtung (x) möglich ist.

4. Kraftfahrzeug nach einem der vorhergehenden Ansprüche, **dadurch gekennzeichnet, dass** bei der Montage des Cockpitmoduls in der Fahrzeugkarosserie ein Toleranzausgleich zwischen dem Halter (4) und einem unteren Windlauf (5) der Fahrzeugkarosserie in zumindest einer Richtung möglich ist.

5. Kraftfahrzeug nach Anspruch 4, **dadurch gekennzeichnet, dass** der Toleranzausgleich zwischen dem Halter (4) und dem unteren Windlauf (5) zumindest in Fahrzeuglängsrichtung (x) möglich ist.

## Claims

1. A motor vehicle with a cockpit module, which comprises at least a support tube (1) and a dashboard connected thereto, the side ends of the support tube (1) being connected to the A-pillars of the vehicle body, the support tube (1) being supported by a holder (4) in the region between the two A-pillars on a lower cowl (5) **characterised in that** when assembling the cockpit module, a tolerance compensation is possible between the support tube (1) and the holder (4) in at least one direction, a head-up display and/or a steering column being connected to the holder as tolerance-sensitive attachment parts.

2. A motor vehicle according to claim 1, **characterised in that** the holder (4) is positioned during assembly in relation to the connection points of the support tube (1) to the A-pillars.

3. A motor vehicle according to claim 1 or 2, **characterised in that** the tolerance compensation is possible at least in the longitudinal direction (x) of the vehicle.

4. A motor vehicle according to any of the preceding claims, **characterised in that** during assembly of the cockpit module in the vehicle body, a tolerance compensation is possible between the holder (4) and a lower cowl (5) of the vehicle body, at least in one direction.

5. A motor vehicle according to claim 4, **characterised in that** the tolerance compensation is possible between the holder (4) and the lower cowl (5), at least in the longitudinal direction (x) of the vehicle.

## Revendications

1. Véhicule automobile comportant un module de cockpit composé d'au moins un tube de support (1) et d'un tableau de bord relié à celui-ci,
les extrémités latérales du tube de support (1) étant reliées aux colonnes A de la carrosserie du véhicule,
le tube de support (1) étant appuyé par l'intermédiaire d'un moyen de fixation (4) à un tablier inférieur (5), dans la zone comprise entre les deux colonnes A,
**caractérisé en ce que**
lors de l'assemblage du module de cockpit, il existe une possibilité de compensation de tolérance entre le tube de support (1) et le support (4) dans au moins une direction, et
un affichage frontal et/ou une colonne de direction sont reliés au support comme composants sensibles aux tolérances.

2. Véhicule automobile selon la revendication 1,
**caractérisé en ce qu'**
au montage, le support (4) est positionné par rapport aux points de liaison du tube de support (1) et des colonnes A.

3. Véhicule automobile selon la revendication 1 ou 2,
**caractérisé en ce que**
la compensation de tolérance se fait au moins dans la direction longitudinale (x) du véhicule.

4. Véhicule automobile selon l'une des revendications précédentes,
**caractérisé en ce qu'**
au montage du module de cockpit dans la carrosserie du véhicule, une compensation de tolérance dans au moins une direction existe entre le support (4) et le tablier inférieur (5) de la carrosserie du véhicule.

5. Véhicule automobile selon la revendication 4,
**caractérisé en ce que**
la compensation de tolérance entre le support (4) et le tablier inférieur (5), existe au moins dans la direction longitudinale (x) du véhicule.
